# EUROPEAN PATENT APPLICATION

(11) **EP 0 627 342 A1**
(43) Date of publication of application: **07.12.1994**
(21) Application number: 94302316.8
(22) Date of filing: 30.03.1994
(51) Int. Cl.: B60R 21/20, F16B 35/04

(54) **Positive orientation stud for an airbag restraint system**

(30) Priority: 04.06.1993 US 72147
(71) Applicant: MORTON INTERNATIONAL, INC., Chicago, Illinois 60606 (US)
(72) Inventor: Rogers, Mark, Roy, Utah 84067 (US); Ralston, Joseph L., North Ogden, Utah 84414 (US)
(74) Representative: Bankes, Stephen Charles Digby

(57) **Abstract**

An inflator (12) for a vehicle occupant airbag restraint system (10) includes a threaded stud (20) with opposed flat surfaces (22), a raised key portion where the stud joins an end wall (18) of the inflator (12) and an unthreaded lead-in portion at its end. The invention also extends to a system including such an inflator (12) and an airbag reaction can housing (32) with a slot (34) adapted to receive the stud (20). The flattened part (22) of the stud (20) prevents incorrect assembly of the system and ensures that the inflator has the correct rotational orientation with respect to the housing (32) so that inflation gas exit ports (16) face in the desired direction.

## Description

### BACKGROUND OF THE INVENTION

This invention relates to vehicle airbag restraint systems, and more particularly to a positive orientation stud for correctly aligning exhaust ports of an inflator with the module reaction can of the airbag system.

A vehicular airbag restraint system generally includes an inflator which may comprise a cylindrical housing which encloses some form of gas generating material which when ignited generates a non-toxic gas under pressure within the housing. The housing is provided with a plurality of predetermined arranged ports, which are generally referred to as nozzles. The ports direct the generated gas out of the inflator housing into a reaction can in which the inflator is positioned along with the airbag inflated by the gas. The proper rotational alignment of the ports with respect to the reaction can is critical to the proper functioning and inflation of the airbag positioned in the reaction can.

### SUMMARY OF THE INVENTION

It is an object of this invention to provide a new and improved alignment structure in an airbag restraint system for aligning the discharge ports of an inflator in a module reaction can which assures proper rotational alignment of the ports in the reaction can.

Another object of this invention is to provide a new and improved alignment structure for an airbag restraint system which actually prevents assembly unless the correct rotational orientation of the ports occurs.

Still another object of this invention is to provide a new and improved alignment structure for an airbag restraint system which not only assures proper rotational orientation of an inflator with respect to a reaction can but also provides axial mating for holding the mating parts in proper rotational as well as axial orientation.

In carrying out this invention, in one illustrative embodiment thereof, an inflator, having a generally cylindrical chamber therein, is provided for an airbag restraint system. The chamber is provided with a plurality of gas dispensing ports arranged in a predetermined configuration in the chamber. A positive orientation stud flattened on at least one side thereof extends from one end of the chamber. The positive orientation stud is adapted to fit in a complementary slot in a reaction can carrying an airbag to be inflated by gas from the chamber. The flattened stud prevents the insertion of the chamber into a reaction can unless the stud is in proper aligned position.

### BRIEF DESCRIPTION OF THE DRAWINGS

The invention, together with further objects, aspects, features and advantages thereof will be more clearly understood from the following description taken in connection with the accompanying drawings.

Figure **1** is a perspective exploded view of an airbag restraint system demonstrating an inflator having a positive orientation stud in accordance with the present invention removed from the module reaction can carrying an airbag in which the inflator is positioned.

Figure **2** is a front view, shown broken away and in cross-section, of the inflator of Figure 1 shown mounted in the module reaction can.

Figure **3** is an end view of the inflator shown in Figure 1 facing the positive orientation stud extending from the cylindrical chamber partially broken away from the inflator.

Figure **4** is a cross-sectional view of the inflator of Figure 1 taken along lines 4-4 of Figure 1.

### DESCRIPTION OF THE PREFERRED EMBODIMENTS

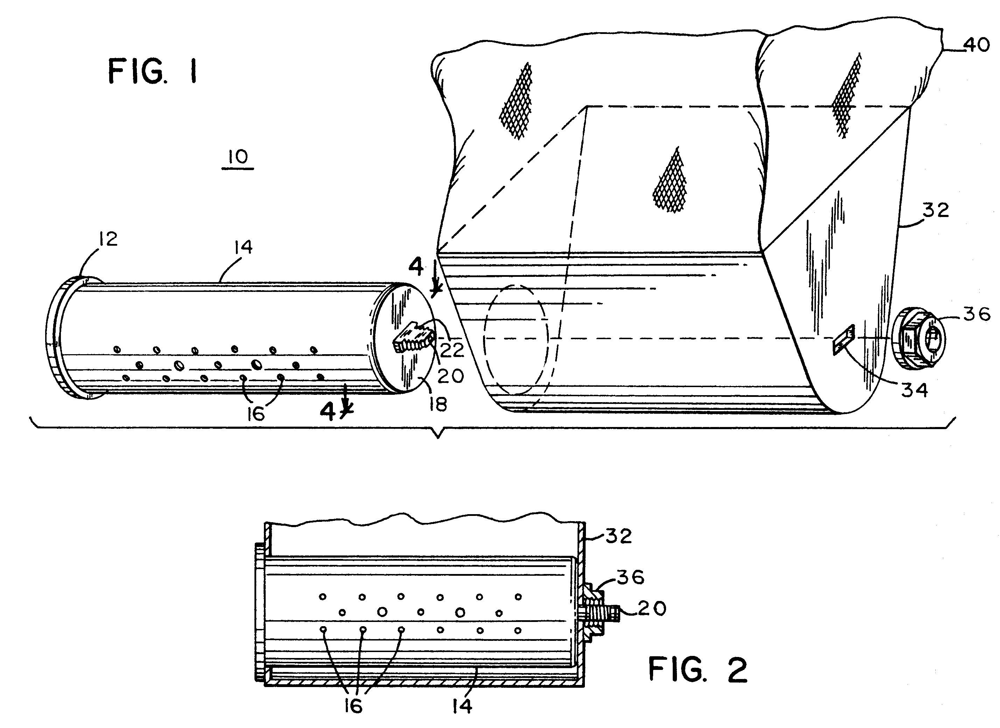

Referring now to Figure **1**, an airbag restraint system referred to generally with the reference numeral **10** comprises an inflator **12**, a reaction can housing **32** and an inflatable airbag cushion **40**. The inflator **12** includes an inflator chamber **14** having a plurality of gas dispensing or exhaust ports **16** arranged in a predetermined configuration in the chamber **14**. The inflator **12** includes a gas generator housed within the inflator chamber **14** which when activated generates a volume of non-toxic gas under pressure which exits the chamber **14** through the exhaust ports **16**. The gas generator is not shown and may be of conventional form as the details thereof do not constitute a part of the present invention.

The inflator chamber **14** has an end wall **18** which carries a positive orientation stud **20** which is a forged protrusion extending from the chamber end wall **18** and is used for attaching the inflator **12** to the reaction can housing **32** in the manner shown in Figure 2.

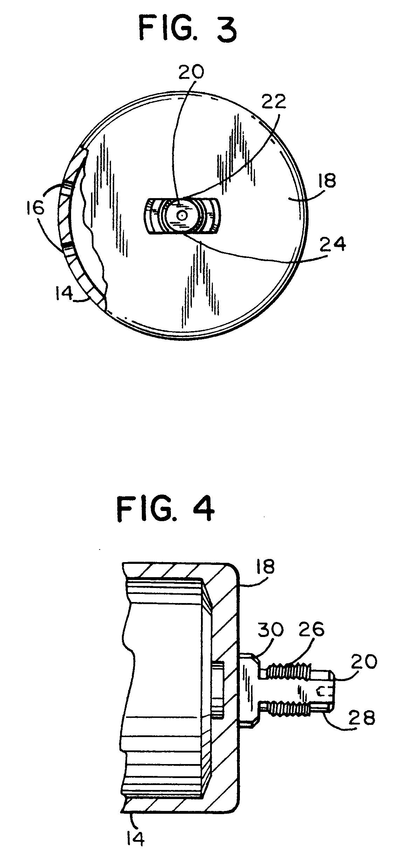

As will best be seen in Figures **3** and **4**, the positive orientation stud **20** is provided with a keying means for providing the desired positive orientation and has, for example, at least one flat surface **22** machined thereon and in the present preferred embodiment having a pair of parallel flat surfaces **22** and **24** machined thereon thereby providing a generally rectangular configuration as seen in end view. The rectangular configuration has generally rounded ends as seen in Figure **3**. As will best be seen in Figure **4**, the positive orientation stud **20** is provided with threads **26** and an unthreaded lead-in **28**. The stud **20** is also provided with a raised interface key **30** located where the stud **20** meets the chamber end wall **18**.

As will best be seen in Figure **1**, the reaction can housing **32** includes a complementary slot **34** which is adapted to accommodate the positive orientation stud **20** for properly positioning the inflator **12** in the reaction can. The positive orientation stud is mounted in the slot **34** by a nut **36** being attached on the stud **20** as is illustrated in Figure **2**. The unthreaded lead-in **28** on the stud **20** prevents the improper threading of the nut **36** which holds the assembly together.

The positive orientation stud **20** functions to guarantee the correct rotational alignment between the exhaust ports **16** of the inflator **12** and the module reaction can housing **32** which is often critical for proper operation of the airbag inflator system **10**. In the preferred embodiment as illustrated, a first key is provided in the form of a pair of parallel flat surfaces **22** and **24** which provide a shape for the stud **20** for insertion into a generally rectangular slot **34** in the reaction can which mating or mounting is possible only when the chamber **14** is in correct rotational orientation relative to the reaction can housing **32**. In the double flat embodiment as shown, the inflator **12** may be inserted into the complementary reaction can slot **34** in either of two positions 180° apart which is permitted by the predetermined configuration of the exhaust ports **16** in the chamber **14**. As has been pointed out the studs **20** may be shaped differently as long as a complementary slot **34** is provided in the reaction can which mates with the stud **20** to provide proper orientation of the chamber **14** and its accompanying exhaust ports in the reaction can **32**. The stud **20** also provides a raised interface key **30** at the junction of the stud **20** and the end wall **18** and thereby provides support and reinforcement at the attachment point in addition to serving as the final mating surface and shape for holding the mating parts, namely inflator **12** in reaction can **32** in the proper rotation as well as axial orientation relative to one another. Accordingly, a double key is provided in the same location for ensuring optimal final mating positions for the parts. The positive orientation stud **20** also makes the insertion of the stud **20** into the mating complementary slot **34** impossible to any depth of engagement unless the stud **20** is properly aligned in the slot **34**.

Accordingly, an improved configuration is provided for positively orienting an inflator into a reaction can of an airbag restraint system which assures the proper alignment of exhaust ports of the inflator chamber with respect to the reaction can housing **32** carrying the airbag cushion to ensure that the airbag will be properly inflated when activated.

Since other changes and modifications varied to fit particular operating requirements and environments will be apparent to those skilled in the art, the invention is not considered limited to the examples chosen for purposes of illustration and includes all changes and modifications which do not constitute a departure from the true spirit and scope of this invention as claimed in the following claims and equivalents thereto.

## Claims

1. An inflator (12) for an airbag restraint system (10) comprising an airbag inflator (12) having a generally cylindrical chamber (14) therein,
a plurality of gas dispensing ports (16) arranged in a predetermined configuration in said chamber (14),
a positive orientation stud (20) extending from one end (18) of said chamber (14) and adapted to be received in a reaction can (32) carrying an airbag,
said positive orientation stud (20) adapted to be positioned in a complementary slot (34) in the reaction can (32) for aligning said gas dispensing ports (16) with respect to the reaction can (32) thereby ensuring the proper alignment and inflation of an airbag when the chamber (14) is activated with gas.

2. The inflator (12) as claimed in claim 1 in which said orientation stud (20) includes at least one flat (22, 24) on said stud (20).

3. The inflator (12) as claimed in claim 2 in which said orientation stud (20) has a pair of parallel flats (22, 24) thereon providing a generally rectangular configuration as seen from an end view thereof.

4. The inflator as claimed in claim 2 or 3 in which said positive orientation stud (20) includes a raised interface key (30) where the stud (20) extends from said chamber (14) which serves as a final mating surface between the chamber (14) and a reaction can (32) in which the chamber (14) is positioned and for holding the mating parts in proper rotational and axial position with respect to each other.

5. The inflator (12) as claimed in any preceding claim in which said stud (20) is threaded and adapted to receive an attachment nut (36) thereon, said stud (20) being provided with an unthreaded lead-in (28) at the extreme end thereof for preventing improper threading of the nut (36) used to hold the inflator (12) in a reaction can (32).

6. An airbag restraint system (10) including an inflator (12) as claimed in any preceding claim, a reaction can housing (32) and means (36) positioned on said stud (20) for mounting said inflator (12) in said reaction can housing (32), said reaction can housing (32) including a complementary mating slot generally conforming to the shape of said orientation stud (20) for receiving and mating with said orientation stud (20) for providing a predetermined rotational orientation of the exhaust ports (16) of said cylindrical chamber (14) with respect to said reaction can housing (32).

7. The air bag restraint system (10) as claimed in claim 6 in which said stud (20) is threaded and said means (36) for mounting said inflator in said reaction can housing comprises a nut.

8. The airbag restraint system (10) as claimed in claim 6 or 7 in which said orientation stud (20) comprises a first key and a second key is provided in the form of a raised interface key (30) located where the stud (20) joins said one end (18) of said chamber, said second key engaging said complementary mating slot (34) of said reaction can (32) for retaining the mating inflator (14) and reaction can housing (32) in proper rotational and axial orientation relative to one another.
